# EUROPEAN PATENT APPLICATION

(11) **EP 3 113 152 A1**
(43) Date of publication of application: **04.01.2017**
(21) Application number: 16177140.7
(22) Date of filing: 30.06.2016
(51) Int. Cl.: G08G 1/16, G08G 1/0962

(54) **A SYSTEM ONBOARD A VEHICLE AND AN IMPROVED METHOD FOR THE DETECTION OF OBJECTS IN AN ENVIRONMENT SURROUNDING A VEHICLE**

(30) Priority: 01.07.2015 IT UB20151802
(71) Applicant: Magneti Marelli S.p.A., 20011 Corbetta (MI) (IT)
(72) Inventor: Bollea, Denis, I-10070 Fiano (Torino) (IT); Lini, Gabriele, I-43121 Parma (IT); Pasteris, Paolo, I-13897 Ochieppo Inferiore (Biella) (IT); Zani, Paolo, I-43015 Noceto (Parma) (IT); Patander, Marco, I-43058 Sorbolo (Parma) (IT)
(74) Representative: Deambrogi, Edgardo

(57) **Abstract**

A system on board a vehicle for the detection of objects in an environment surrounding the vehicle is described, including:
- at least one image capture device (30) arranged for acquiring images (S) representative of a region of observation in the environment surrounding the vehicle;
- a map (16) of a road network, comprising attributes associated with segments of road of the road network, which include geometrical data indicative of the real road; and
- a device (12) for positioning the vehicle within the road network,
in which a predetermined number of road segments of the road network downstream of the determined position of the vehicle and the attributes associated therewith constitute an electronic horizon (18) of the vehicle, and
in which an electronic processing unit (40) connected to the image capture device (30) is arranged for selecting at least one area (A) of the image acquired by the image capture means (30) as a function of the electronic horizon (18) of the vehicle,
the aforementioned selected area (A) being representative of a region of interest of the region of observation,
whereby the electronic processing unit (40) is arranged for detecting predetermined elements of interest (P) within the region of interest.

## Description

The present invention generally relates to vehicle driving assistance systems, and more specifically, a system on board a vehicle and a method for the detection of objects in an environment surrounding a vehicle.

In the past few years, the progress achieved in the field of passive security and the equipping of vehicles with active security systems have contributed to a significant improvement in road safety.

In order to further reduce dangerous situations and achieve a higher level of driving comfort, driving assistance systems are being developed to assist the driver in manoeuvres and in each critical driving situation which might occur on the road, preventing potential risky situations.

Amongst the preventive safety functions covered by such systems is included that for recognition of elements of the environment surrounding the vehicle, in particular the recognition of objects in the environment ahead of the vehicle, even more particularly the recognition of objects interacting with the path of travel of the vehicle. The term "object" is, in general, understood to mean an element of the environment surrounding the vehicle, either a material element or of an informative nature, such as an element of the road infrastructure, for example a road signage element, another vehicle or one of its parts, for example a preceding vehicle in the same driving lane or a vehicle arriving in an opposite traffic lane or the headlights of a vehicle, an obstacle present on the roadway.

The recognition of objects interacting with the path of travel of a vehicle is carried out by means of directional detection devices, such as radar or laser detection means, or by image acquisition means, such as cameras or similar means of image capture in the visible or in the infrared, installed on board the vehicle, typically oriented in the direction of travel of the vehicle and adapted to reproduce the environment surrounding the vehicle in at least one predetermined region of observation, typically a region of interest ahead of the vehicle.

In the case of acquisitions of images, the analysis of the scenes captured in the region of interest allows significant elements of the scene, i.e. of interest for driving, to be identified, for example light radiating or reflecting elements, such as the headlamps of a vehicle or the road illuminating infrastructures, oncoming vehicles or vehicles travelling in the same direction and sense as the vehicle or else any other object ahead of the vehicle in the direction of travel, road signs, etc.

One exemplary application of the recognition of the scenes in an environment ahead of the vehicle is that of the recognition at night of the oncoming vehicles or of the vehicles travelling in the same direction, in order to be able to automatically adjust the illuminating beam from the headlights of the vehicle according to the requirement to avoid dazzling the other vehicles that occupy the road.

Another exemplary application of the recognition of the scenes in an environment ahead of the vehicle is that of the recognition of the road infrastructure and, in particular, of the road signage elements, in order to be able to automatically adjust the speed of the vehicle and thus to guarantee a driving comfort adapted to the circumstances, as a function of the conditions of the road infrastructure and possibly of the imposed or probable path of the vehicle.

DE 10 2012 213 344 describes a system for the recognition of road signs in assistance to a vehicle driver, which carries out a recognition of the road signs by processing of an image captured by a camera selected from between three available cameras (respectively a central camera, a right camera and a left camera having different regions of observation), in which the selection takes place on the basis of the knowledge of the road layout downstream of the vehicle, and in particular of the region of the layout locally visible or prominent for the vehicle.

Disadvantageously, both in the case of a single image capture device and in the case of a plurality of selectable image capture devices, the acquisition of the scenes concerns the entire region of observation of the image capture means (of the selected image capture means) and the analysis of the scenes for the recognition of elements of the environment surrounding the vehicle and the identification of significant elements of the scene involves examining the entire acquired image, thus the processing is particularly costly in terms of time and of processing resources. Not only this, but it is also possible for so-called "false positives" to be generated, i.e. there is the recognition of a significant element even if it is an element of the environment that does not directly concern the path of travel of the vehicle. This happens for example when a bright element is recognized, such as an infrastructure of road illumination or an illuminated sign, outside of the possible path of travel, even if the attention of the system is solely intended for the recognition of objects present on the road itself, such as for example oncoming vehicles or vehicles going in the same direction and sense of travel as the vehicle, in order to control the orientation of the illuminating beam from the headlamps of the vehicle. Furthermore, the selection of one of several image capture devices turns out to be inefficient if the elements of interest that it is desired to be able to detect are located in different and separate regions unobservable by the single image capture element selected (for example by virtue of the winding nature of the roadway).

In similar applications, the areas of interest to be explored for the recognition and the identification of significant elements are limited solely to the road itself (the roadway and possibly a region neighbouring it or associated with it) which represents a part of the image.

The purpose of the present invention is to provide a satisfactory solution to the aforementioned problems, avoiding the drawbacks of the prior art.

In particular, the aim of the present invention is to provide a system and a method for the recognition of significant elements in images of a scene captured in a region of observation of a vehicle, which is fast and precise, in other words that does not perform superfluous processing operations to the advantage of the speed of execution of the functions for the recognition of objects and with no detriment for the reliability of such a recognition.

According to the present invention, such an aim is met by virtue of a system for the detection of objects in an environment surrounding a vehicle having the features according to Claim 1.

Particular embodiments form the subject of the dependent claims, whose content is intended to be an integral part of the present description.

A further subject of the invention is a method for the detection of objects in an environment surrounding a vehicle as claimed.

Yet another subject of the invention is a driving assistance system as claimed.

In summary, the present invention is based on the principle of limiting the processing of the whole image of a scene captured by the means of acquisition with which a vehicle is equipped to a portion of image that is, on its own, representative of a region of interest in the region of observation for the current application, where the recognition and the identification of significant elements is of interest.

This limitation is achieved by means of the selection, within a complete image, of areas of image within which the significant elements that it is desired to identify may possibly be located, depending on the knowledge of map data of a road network, in particular of enhanced map data comprising attributes associated with the segments of road of the road network, such as the map data known as electronic horizon of the vehicle that comprises topographical data enhanced for use with ADAS (Advanced Driver Assistance Systems) applications, i.e. topographical data enhanced with geometrical data as attributes indicative of the real road, designed to allow the execution of ADAS functions by the vehicle. Preferably, a preliminary registration is provided between the reference system for the image capture means and the vehicle, and such a registration is advantageously carried out periodically in order to avoid potential misalignment of the image capture means with respect to the longitudinal axis of the vehicle.

For the purposes of the invention, it is not relevant how the map data of the electronic horizon is acquired; in particular, if it is acquired by storage means arranged on board the vehicle or remotely, via communication means with a remote station for use of an electronic horizon information service, nor if the acquired map data is possibly limited to a geographical region, i.e. to an area of road map with predetermined dimensions, within which the vehicle is located, for example is geopositioned.

The limitation of the image processing of a scene to a portion of image configured or optimized as a function of the electronic horizon known to the vehicle, whereby the area of an image of a captured scene is cut according to the indications of the electronic horizon as a function of the requested application, allows a substantial reduction in the number of image pixels to be processed with respect to the total number of pixels of the complete image.

The selected image area is supplied to processing means in order to perform at least one from amongst specific predetermined processing algorithms, depending on the case of use in question, and in the end, based on the obtained results, to enable the implementation of a predetermined control strategy for the vehicle, such as for example a strategy for controlling the light beam (orientation or configuration, for the illumination of a curving road or in order to avoid dazzling oncoming or preceding vehicle drivers), for the recognition of vehicles under daytime or night-time conditions, for the recognition of road signs, in order to adopt engine control strategies, for example in the case of vehicles equipped with adaptive systems for controlling the cruising speed or for optimizing fuel economy.

Advantageously, the limitation of the processing of the image of a scene to a portion of image configured or optimized as a function of the electronic horizon known to the vehicle allows the reduction or elimination of any potential false positives, i.e. identifications of objects not relevant per se to the predetermined control strategies for the vehicle being implemented.

For example, in a control strategy for the light beam, the limitation of the processing of the image of a scene to a portion of image that includes the representation of the roadway in the scene ahead of the vehicle avoids the detection of bright objects not relevant for driving since they are outside of the path of travel of the vehicle (so-called false positives), such as sources of illumination coming from areas external to the driving lanes (for example, road signs) or to the roadway (for example, public illumination infrastructures, illuminated signs, private sources of illumination), and since they are present in an image area not corresponding to the location of the roadway in the captured scene.

By way of a further example, in a strategy for recognition of the road signs, the limitation of the processing of the image of a scene to a portion of image, also composite, that includes the representation of the edge of the roadway in the scene ahead of the vehicle at a predetermined height from the ground and, possibly, the representation of gantries above the roadway, allows to exclude the detection of reflective objects not relevant for driving since they are outside of the path of travel of the vehicle (so-called false positives), such as sources of illumination coming from the driving lane (for example, travelling vehicles) or external to the roadway (for example, public illumination infrastructures, illuminated signs, private sources of illumination, road signs located in adjacent segments of road not in the path of the vehicle), and since they are present in an image area not corresponding to the location of the edges of the roadway in the captured scene.

Naturally, the concepts of the present invention are achievable according to what is described and claimed independently of the specific image recognition technology adopted.

Other features and advantages of the invention will be presented in more detail in the following particular description of one of its embodiments, given by way of non-limiting example, with reference to the appended drawings, in which:
Figure 1 is a block diagram of driving assistance including a system for the detection of objects in an environment surrounding a vehicle according to the invention; and
Figure 2 shows one example of a scene representative of the environment ahead of a vehicle and of the related image area selected (region of interest) for the application of a method for detection of objects.

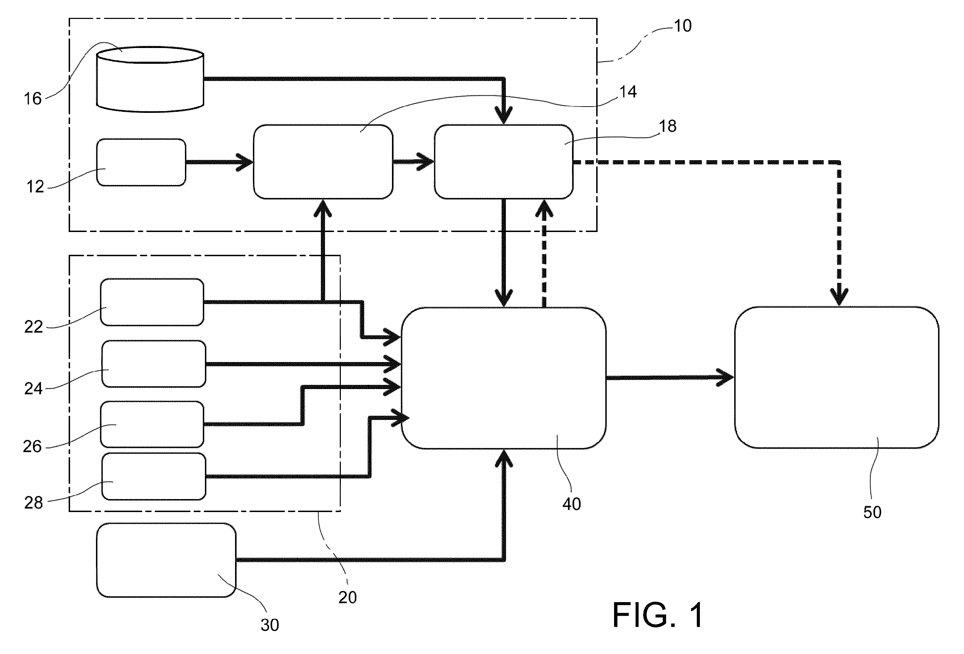

Figure 1 shows a block diagram of a driving assistance system based on a system and a method for detecting objects in an environment surrounding the vehicle according to the invention.

A portion of the system arranged for the acquisition and the management of information on the positioning of the vehicle is identified by 10.

This comprises an on-board positioning receiver 12, such as a receiver of a satellite positioning system (GPS or similar) and an associated positioning system of the vehicle 14 designed to determine the position of the vehicle on a geographical map, preferably a road map. One or more road maps enhanced with data representing a road network in a geographical area within which the vehicle is located are indicated as a whole by 16. These may be permanently stored in a mass storage medium on board the vehicle or downloaded from a remote supplier via on-board communication means or personal communication means in possession of a user, in the latter case with a predetermined frequency, for example relating to the current location of the vehicle.

An electronic processing system 18 is arranged for integrating the vehicle geographical positioning data with the supplementary information obtainable from the data representing the road network in the geographical positioning area and for building an electronic horizon of the vehicle. An electronic horizon typically forms a database that includes a road map referenced to the geographical coordinates of the road network that it represents, in which a plurality of attributes is associated with each road segment including geometrical data such as for example the length, the radius of curvature, the slope and other data such as the class (motorway, suburban road, urban road, country road), the number of lanes. Depending on the road class , a presumed standard width is attributed to the road segment, which represents a further geometrical data element. The attributes associated with the road segments of a road map allow to compose enhanced topographical data for use with ADAS (Advanced Driver Assistance Systems) applications, i.e. topographical data enhanced with geometrical data used as attributes indicative of the real road, designed to allow the execution of ADAS functions by the vehicle.

Reference numeral 20 identifies a portion of the system configured for the acquisition of information on vehicle dynamics or of information coming from other sensors (for example inertial units), possibly by connection to the communications network of the vehicle which, in the example described, is based on CAN technology.

In particular, this comprises a plurality of vehicle dynamics sensors for , including an odometric sensor 22, a pitch sensor 24, a yaw angle sensor 26 and a roll sensor 28 for the vehicle, designed to supply respective vehicle dynamics data.

Advantageously, the data acquired from the odometric sensor 22 can be supplied to the electronic processing system 16 arranged for determining the position of the vehicle, for a more accurate determination of the position of the vehicle in conjunction with the satellite positioning data (referred to as dead reckoning).

Finally, images acquisition means installed on board the vehicle are indicated by 30, preferably image capture means such as a front camera for capturing images in the visible or infrared spectral region representing a scene in a region of observation surrounding the vehicle, more specifically in a region of observation ahead of the vehicle, i.e. turned in the direction of travel of the vehicle. In one currently preferred embodiment, the image capture means 30 comprise a front camera installed on the windscreen or on the radiator grill of the vehicle, turned towards a region of observation ahead of the vehicle, where the median axis of the region of observation coincides with the longitudinal axis of the vehicle. Advantageously, the camera may be configured in such a manner as to present a region of observation large enough to be able to capture the driving lane of the vehicle and the adjacent lanes in the case of roadways with more lanes.

In different embodiments, the image capture means may be based on radar technology, lidar technology or other technologies that allow information on the environment surrounding the vehicle to be acquired.

Advantageously, the data acquired from the pitch sensor 24 and roll sensor 28 of the vehicle are also used to respectively detect the translation and the rotation of the horizon line with respect to the region of observation of the image capture means as a function of the vehicle dynamics.

The electronic horizon, the vehicle dynamics data and the images generated by the image capture means are supplied as input to processing means for the detection of objects, generally indicated by 40.

The processing means 40 are designed to apply at least one predetermined algorithm for the detection of objects, for example an algorithm for the recognition of shapes in order to detect the presence of vehicles travelling on the roadway, an algorithm for the recognition of image areas whose luminance and chrominance is specific to the headlights of vehicles, an algorithm for the identification of road signs based on the recognition of shapes and semantics with respect to a predefined collection of road signs of interest.

In a pre-processing phase, the processing means 40 are configured to compensate for any potential translations and rotations of the horizon line with respect to the region of observation of the image capture means, as a function of the data acquired from the pitch and roll sensors.

The processing means 40 are configured for selecting from the image acquired by the image means 30 a portion of image which is representative of a region of interest for the current application, and for applying said at least one predetermined algorithm for the detection of objects only to said selected portion of image. For this purpose, the processing means comprise selection means designed to segment an image, in other words to define the set of the image elements of interest to which the said at least one algorithm for the detection of objects is to be applied.

The definition of the region of interest for the current application is predetermined at the processing means when initially programming the system.

For example, the region of interest for applications to the control of the light beam include the image area that represents the track of the entire roadway in the scene ahead of the vehicle. Advantageously, in applications linked to the management of the projection of road illumination by the vehicle, the projection of the road travelled by the vehicle at a predetermined height from the ground is considered, preferably at a height from the ground of 1 m, in such a manner that it corresponds approximately to the height of the headlamps of an oncoming vehicle or to the height of the beam from the headlamps which can be annoying for preceding vehicles driving in the same direction.

In the recognition of image areas whose luminance and chrominance is that specific to the headlights of vehicles, a moveable threshold test is carried out so as to select a few light sources as "candidates", that is as possible headlights, for example by difference with respect to a background light intensity, and a classification step and a tracking step are then implemented in order to determine which light sources are effectively headlights.

The image area for the track of the roadway is predefined considering the standard width of the road according to its known class. The image area for the track of the roadway conveniently comprises an area of adjoining verge with respect to the presumed width of the road network, the area of verge being advantageously variable by a modifiable factor with respect to the presumed width of the road network.

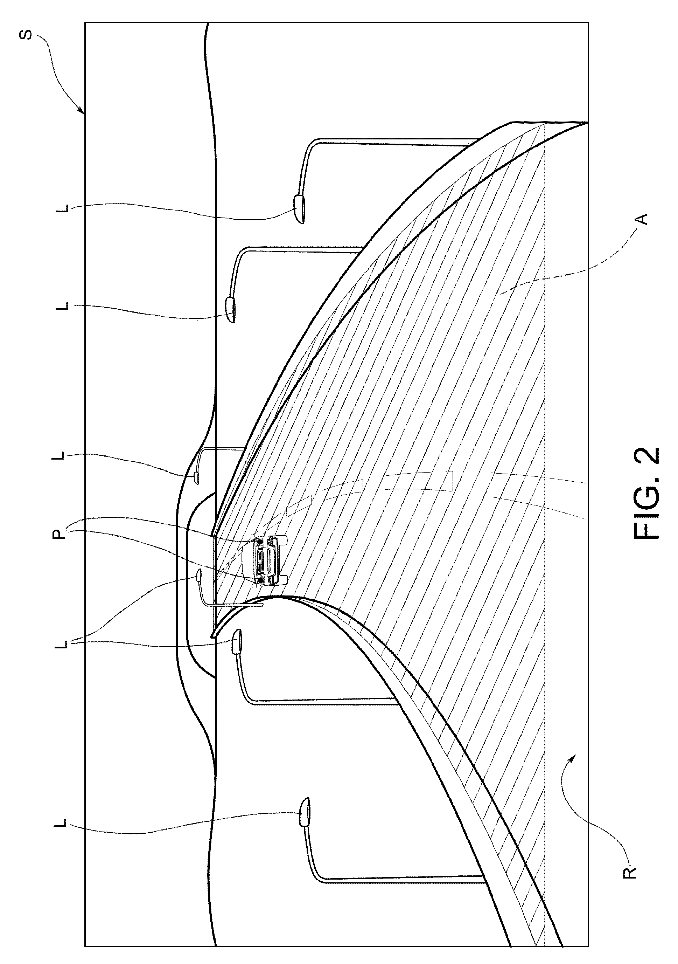

Figure 2 shows one example of a scene representative of the environment ahead of a vehicle and of the relevant selected image area (region of interest) for the application of a method for detection of objects. A roadway is indicated by R, the scene of which an image is acquired by S, by P the headlamps of a vehicle travelling in a driving lane opposite to that of the vehicle equipped with the system that is the subject of the invention, whose outline is poorly identified, for example because the scene S is a night-time scene, street lamps disposed on the margins of the roadway are indicated by L. In the figure, the region of interest selected in the image area of the overall scene is indicated by A and hatched, which - as advantageously provided by the invention - allows light sources to be excluded that are not of interest for the purposes of controlling the light beam from the vehicle, such as the street lamps L. Such a region of interest is derived from the electronic horizon of the vehicle, which allows the reconstruction of the road segments, the related width and track, based on the map data of the road network and on the related attributes, for a number of segments depending on the case of use and on the structure of the road.

The region of interest derived from the electronic horizon of the vehicle is made fitting with the corresponding element of the scene by construction of a virtual area (mask) starting from the electronic horizon data (road track and width), which is then overlaid "in register " onto the image of the scene in order to get the segmentation borders of the image.

By way of another example, the region of interest for applications to recognition of the road signs includes the image area which represents the edge of the roadway in the scene ahead of the vehicle at a predetermined height from the ground and, possibly, the location of gantries above the roadway.

As a further example, the region of interest for applications to engine control for the adaptive regulation of the cruising speed or for optimizing fuel economy includes the image area which represents the track of the roadway in the scene ahead of the vehicle and the edge of the roadway in the scene ahead of the vehicle at a predetermined height from the ground. In fact, the optimization of the engine control of a travelling vehicle is carried out as a function of the traffic conditions, in other words as a function of the occupation of the road by other vehicles, and of the road signs.

The result of the detection of objects in the selected region of interest is supplied to the input of one or more driving assistance applications 50, such as the aforementioned applications for conformation of the illuminating beam to the road network, for recognition of the road signs, for engine control and others.

Since the image analysis for the detection of objects in the environment surrounding the vehicle is applied only in a selected region of interest, such an operation is faster due to not having to analyze a larger image area, and allows an immediate reaction by the driving assistance application that receive the result of it.

Furthermore, the system turns out to be more reliable with respect to the prior art, since the circumstances are reduced - if not completely excluded - in which the driving assistance applications react to false positive detections, i.e. in the absence of real reasons that would effectively demand a reaction.

In one alternative embodiment, the outcome of a procedure for detection of objects in the region of interest is supplied to the electronic horizon 18 of the vehicle, which thus becomes a dynamic electronic horizon, and is in turn supplied to the input of one or more driving assistance applications. Such an alternative embodiment is represented by means of dashed arrows indicative of the flow of information between the circuit blocks of the system in Figure 1.

It should be noted that the embodiment provided for the present invention in the preceding discussion is purely exemplary and not limitative of the present invention. Those skilled in the art will easily be able to apply the present invention in various embodiments that do not however deviate from the principles presented here. This is in particular the case as regards the possibility of adapting the present invention to driving assistance applications different from those mentioned purely by way of example, for example applications that include the exploration of a region of interest behind the vehicle, for example in parking manoeuvres applications.

Naturally, while maintaining the principle of the invention, the embodiments and the particulars of implementation could be widely varied with respect to what has been described and illustrated purely by way of non limiting example, without however departing from the scope of protection of the invention which is defined by the appended claims.

## Claims

1. Vehicle onboard system for detecting objects in an environment surrounding the vehicle, including:
- image capture means (30) arranged for the acquisition of images (S) representative of a region of observation around the vehicle;
- storage means (16) for storing a map of a road network, said map comprising attributes associated with road segments of the said road network, said attributes including geometrical data indicative of the real road;
- vehicle positioning means (14), designed to determine a position of the vehicle within said road network; and
- electronic processing means (40) connected to the said image capture means (30), designed to detect predetermined elements of interest (P) in said images (S) representative of a region of observation around a vehicle,
in which a predetermined number of road segments of the road network downstream of the determined position of the vehicle, and the attributes associated therewith constitute an electronic horizon (18) of the vehicle,
**characterized in that** said electronic processing means (40) comprise means for selecting at least one image area (A) of said image (S) representative of a region of observation around the vehicle acquired by said image capture means (30), said selection means being arranged to carry out the selection of at least one image area (A) of said image (S) as a function of the electronic horizon (18) of the vehicle, said image area being representative of a region of interest in the region of observation,
whereby said electronic processing means (40) are arranged to detect said predetermined elements of interest (P) in the region of interest (A).

2. System according to Claim 1, in which the said electronic horizon (18) comprises data representative of a road segment ahead of the vehicle in a direction of travel of the vehicle as a function of the determined position of the vehicle.

3. System according to Claim 1, in which said electronic horizon (18) is acquired with a predetermined frequency related to the current location of the vehicle.

4. System according to any one of the preceding claims, wherein said electronic processing means (40) are arranged to acquire data representative of vehicle dynamics.

5. System according to Claim 4, wherein said data representative of vehicle dynamics include odometer data, pitch data, yaw angle data and roll data of the vehicle, said electronic processing means (40) being arranged to detect the translation and rotation of the horizon line with respect to the observation region of the image capture means (30) as a function of the pitch data and the roll data of the vehicle, respectively.

6. System according to any one of the preceding claims, in which the said image capture means (30) comprise a front camera adapted to take images (S) representative of a scene in a region of observation ahead of the vehicle in the visible or infrared spectral region, in which the median axis of the region of observation is coincident with the longitudinal axis of the vehicle.

7. System according to any one of the preceding claims, wherein said electronic processing means (40) are arranged to perform at least one predetermined algorithm of shape recognition to detect the presence of vehicles travelling on the roadway.

8. System according to any one of Claims 1 to 6, wherein said electronic processing means (40) are arranged to perform at least one predetermined algorithm for the recognition of image areas whose luminance and chrominance is that of the headlights (P) of vehicles.

9. System according to any one of Claims 1 to 6, wherein said electronic processing means (40) are arranged to perform at least one predetermined algorithm for the identification of road signs.

10. System according to any one of the preceding claims, wherein said region of interest (A) is predetermined when programming the system as a function of the algorithm performed by the said electronic processing means (40).

11. System according to claim 7 or 8, wherein said region of interest includes an image area (A) which represents the track of the roadway in the scene ahead of the vehicle, at a predetermined height from the ground.

12. System according to Claim 11, wherein the image area (A) which represents the track of the roadway includes a presumed width of the road as a function of its class and comprises a verge area additional with respect to the presumed width of the road, said verge area being variable by a factor which can change as a function of a presumed width of the road.

13. System according to claim 7 or 8, wherein said region of interest includes an image area that represents the edge of the roadway in the scene ahead of the vehicle at a predetermined height from the ground.

14. System according to claim 7 or 8, wherein said region of interest includes an image area that represents the track of the roadway and the edge of the roadway at a predetermined height from the ground, in the scene ahead of the vehicle.

15. System according to any one of the preceding claims, wherein said attributes associated with road segments of said road network include the length of said segments, their radius of curvature, their slope, the class of the road and number of driving lanes, a presumed width being assigned to a respective road segment depending on the road class.

16. Method for the detection of objects in an environment surrounding a vehicle, including:
- acquiring images (S) representative of a region of observation around the vehicle;
- arranging a map (16) of a road network, said map comprising attributes associated with road segments of said road network; and
- positioning the vehicle within said road network,
wherein a predetermined number of road segments of the road network downstream of the determined position of the vehicle, and the attributes associated therewith constitute an electronic horizon (18) of the vehicle,
**characterized in that** it further includes
- selecting at least an image area (A) of said images representative of a region of observation around the vehicle as a function of the electronic horizon (18) of the vehicle, said image area being representative of a region of interest of the region of observation, and
- detecting predetermined elements of interest (P) in the region of interest of said images representative of a region of observation around the vehicle.

17. Driving assistance system, comprising a vehicle onboard system for the detection of objects in an environment surrounding the vehicle according to any one of claims 1 to 15.
